# EUROPEAN PATENT APPLICATION

(11) **EP 4 510 704 A1**
(43) Date of publication of application: **19.02.2025**
(21) Application number: 22937366.7
(22) Date of filing: 11.04.2022
(51) Int. Cl.: H04W 36/14, H04W 88/18

(54) **IMPROVEMENT IN CONTINUITY OF SERVICE IN DIFFERENT NETWORK**

(71) Applicant: Rakuten Mobile, Inc., Tokyo 158-0094 (JP)
(72) Inventor: AOYAGI Kenichiro, Tokyo 158-0094 (JP); MUHAMMAD Awn, Tokyo 158-0094 (JP); SHETE Pankaj, Tokyo 158-0094 (JP); KITAGAWA Koichiro, Tokyo 158-0094 (JP)
(74) Representative: Betten & Resch
(86) International application number: PCT/JP2022/017521
(87) International publication number: WO 2023/199386

(57) **Abstract**

A communication control apparatus has at least one processor that performs: by a switching candidate detection unit, detecting a second network as a switching candidate for a communication device connected to a first network; by a service availability determination unit, determining whether or not the second network can continue to provide the service that the first network is providing to the communication device, based on communication between the first network and the second network; and by a connection control unit, switching the connection of the communication device from the first network to the second network, if it is determined that the second network can continue to provide the service to the communication device.

## Description

### BACKGROUND OF THE INVENTION

### 1. Field of the Invention

The present disclosure relates to improvement of service continuity in different networks.

### 2. Description of the Related Art

The number, types, and applications of wireless communication devices, represented by smartphones and Internet of Things (IoT) devices, continue to increase, and wireless communication standards continue to be expanded and improved. For example, the commercial service of the fifth generation mobile communication system known as "5G" started in 2018, and the standards are still being developed by the 3GPP (Third Generation Partnership Project). Efforts are also underway to develop standards for "6G" or the sixth generation mobile communication system, which would be the next generation of wireless communication standards following 5G.

Mobile communication networks for mobile or portable communication devices such as smartphones and cell phones (hereinafter collectively referred to as "communication device(s)") are usually constructed by communication cells (hereinafter referred to as "terrestrial communication cell(s)") provided on the ground by base stations installed on the ground (hereinafter referred to as "terrestrial base station(s)"). Patent Literature 1 discloses a technology that detects deterioration of communication quality between a communication device and a terrestrial base station and performs the handover of another communication device causing the deterioration to another terrestrial base station.

Patent Literature 1: JP-A-2013-207562

### SUMMARY OF THE INVENTION

The 5G and more advanced wireless communication standards utilize terrestrial communication cells ranging in size from femtocells with radii smaller than ten meters to macrocells with radii exceeding several hundred meters. Furthermore, in some areas where it was difficult to install a sufficient number of terrestrial base stations for various reasons, non-terrestrial networks (NTN) have been considered in addition to or instead of terrestrial networks (TN) by terrestrial base stations. In the NTN, communication satellites and/or unmanned aircrafts flying in outer space and/or the atmosphere such as the stratosphere, are used as base stations (hereinafter referred to as non-terrestrial base station(s), and especially communication satellites are referred to as satellite base station(s)) and provide communication cells on the ground (hereinafter referred to as non-terrestrial communication cell(s), and especially communication cell(s) provided by communication satellite(s) are referred to as satellite communication cell(s)).

In a mobile communication network where such a wide variety of base stations and communication cells can exist, the handover control based solely on the communication quality of each base station as described in Patent Literature 1 may not be appropriate. Furthermore, in a handover between different networks operated by different carriers or network operators, the communication quality of the network after the handover may be low, therefore the continuity of the service that the communication device has been receiving in the network before the handover may be lost due to the handover.

The present disclosure was made in consideration of this situation, and its purpose is to provide a communication control apparatus and the like that can improve the service continuity in different networks.

In order to solve the above problem, a communication control apparatus in a certain aspect of the present disclosure comprises at least one processor that performs: by a switching candidate detection unit, detecting a second network as a switching candidate for a communication device connected to a first network; by a service availability determination unit, determining whether or not the second network can continue to provide the service that the first network is providing to the communication device, based on communication between the first network and the second network; and by a connection control unit, switching the connection of the communication device from the first network to the second network, if it is determined that the second network can continue to provide the service to the communication device.

According to this aspect, if it is determined that the second network can continue to provide the service that the first network is providing to the communication device, the connection of the communication device is switched from the first network to the second network. Therefore, the service continuity in different networks can be improved.

Another aspect of the present disclosure is a communication control method. The method comprises: detecting a second network as a switching candidate for a communication device connected to a first network; determining whether or not the second network can continue to provide the service that the first network is providing to the communication device, based on communication between the first network and the second network; and switching the connection of the communication device from the first network to the second network, if it is determined that the second network can continue to provide the service to the communication device.

Further another aspect of the present disclosure is a computer-readable medium. The medium stores a communication control program causing a computer to perform:
detecting a second network as a switching candidate for a communication device connected to a first network;
determining whether or not the second network can continue to provide the service that the first network is providing to the communication device, based on communication between the first network and the second network; and switching the connection of the communication device from the first network to the second network, if it is determined that the second network can continue to provide the service to the communication device.

In addition, any combination of the above components, and any conversion of the expression of the present disclosure among methods, devices, systems, recording media, computer programs and the like are also encompassed within this disclosure.

According to the present disclosure, the service continuity in different networks can be improved.

### BRIEF DESCRIPTION OF THE DRAWINGS

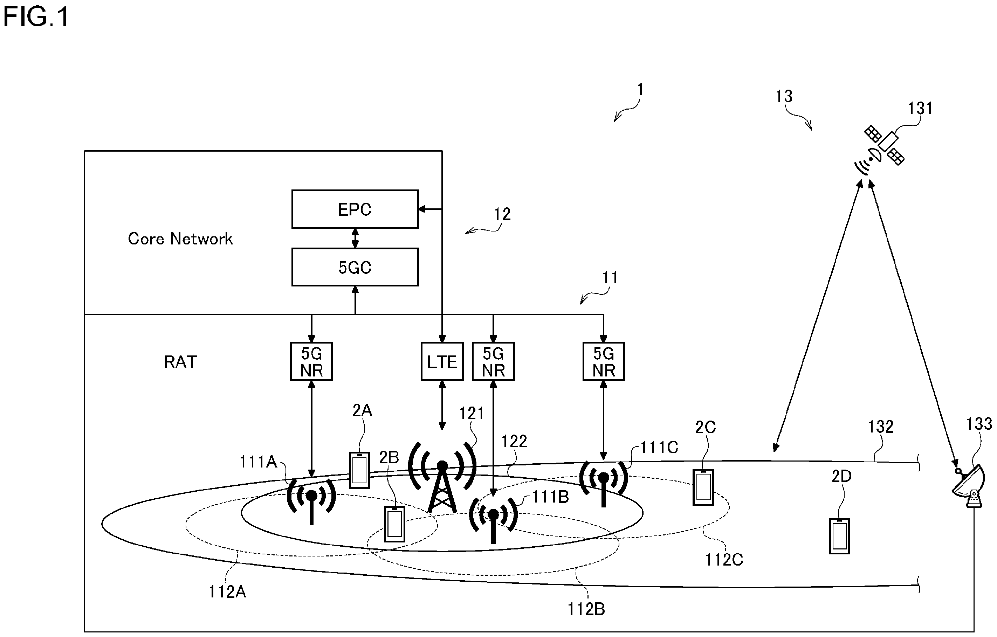

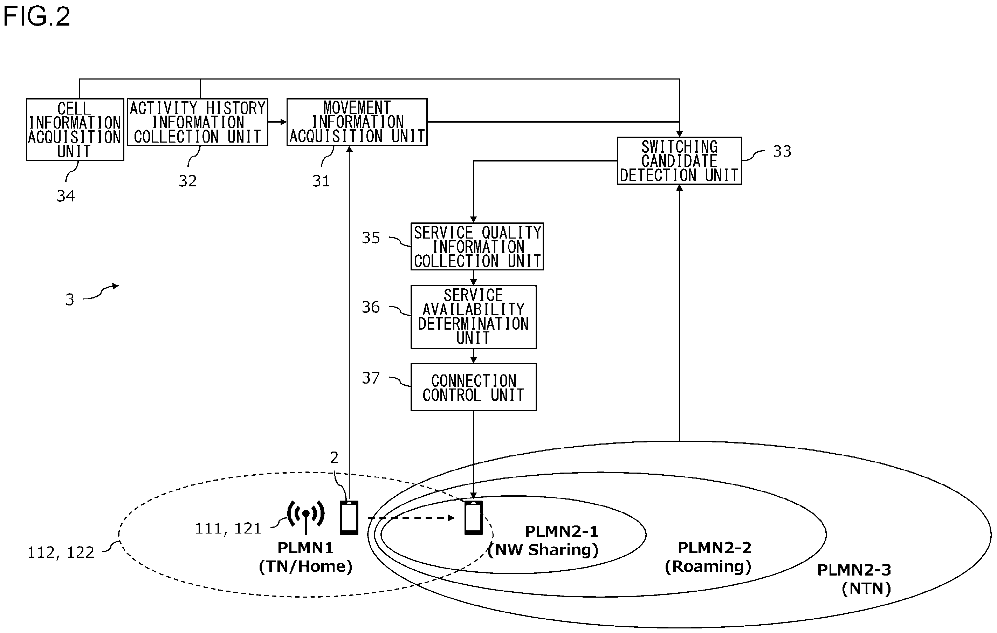

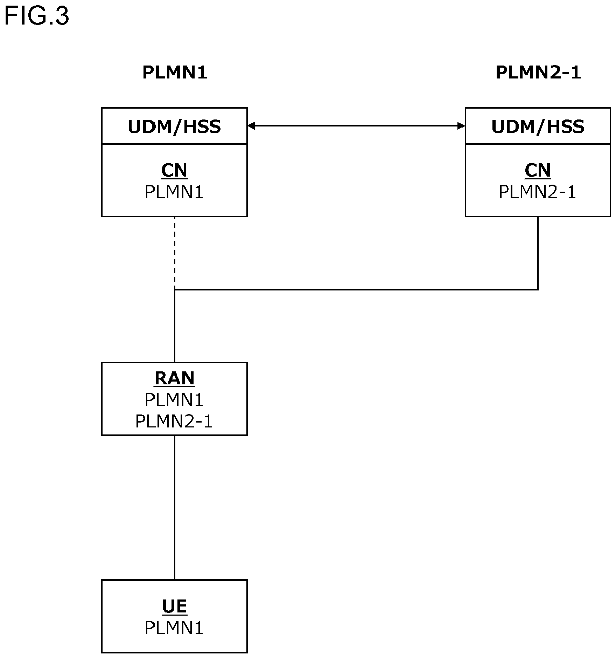

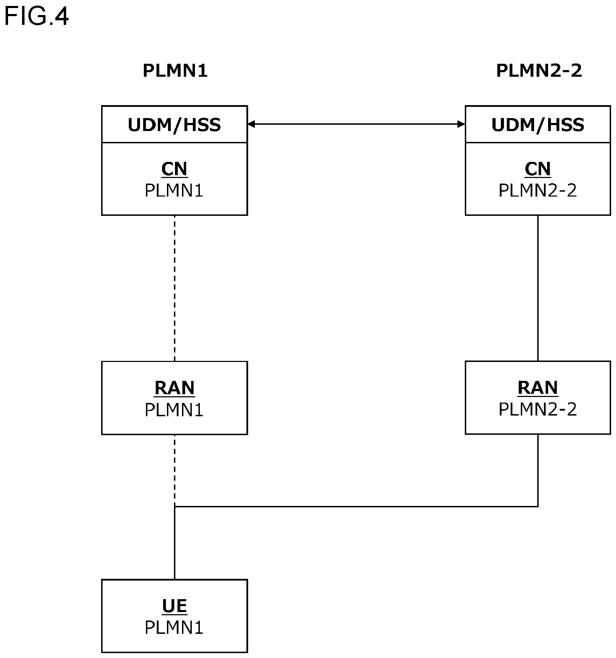

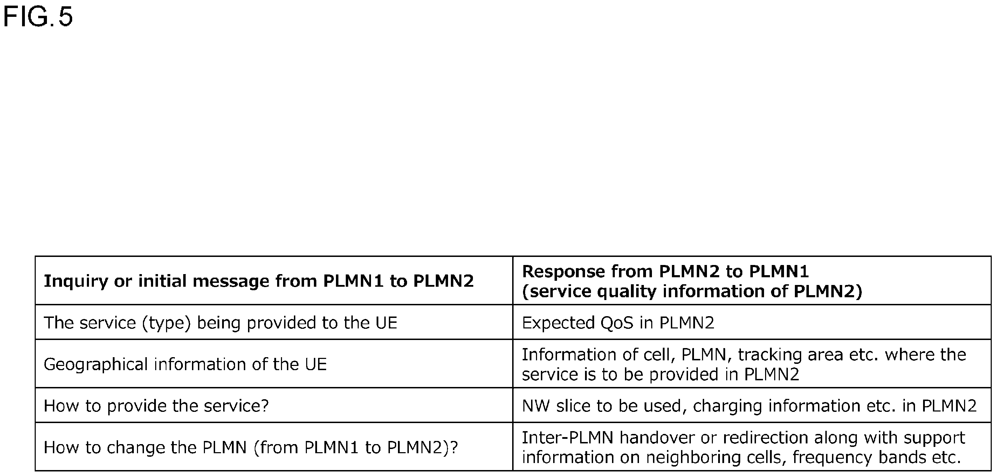

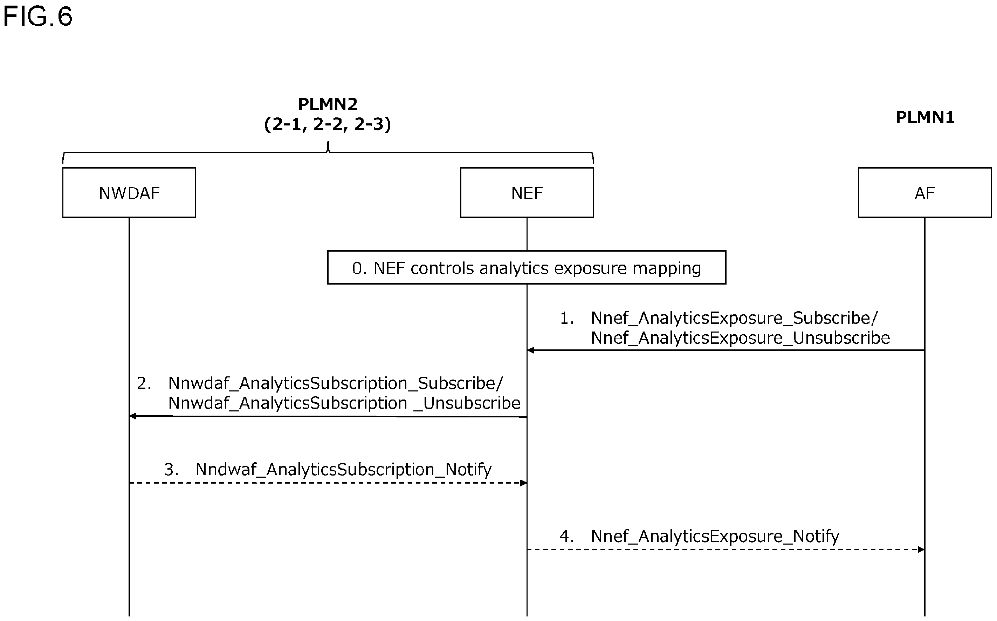

Figure 1 schematically shows the overview of a wireless communication system to which the communication control apparatus is applied. Figure 2 is a schematic functional block diagram of the communication control apparatus. Figure 3 is a schematic diagram of a 2nd PLMN sharing a part of a network facility with a 1st PLMN. Figure 4 is a schematic diagram of the 2nd PLMN, which is a roaming network. Figure 5 shows four concrete examples of the service quality information collected by a service quality information collection unit. Figure 6 schematically shows an example of the procedure when the query and the response as shown in Figure 5 are made by an AF outside the 5GC and an NEF and/or an NWDAF inside the 5GC.

### DETAILED DESCRIPTION OF THE INVENTION

The communication control apparatus according to the present disclosure can be applied to a terrestrial network (TN) constructed by terrestrial communication cells provided on the ground by terrestrial base stations installed on the ground, a non-terrestrial network (NTN) constructed by non-terrestrial communication cells provide on the ground by flying non-terrestrial base stations, and a network where a TN and an NTN coexist. These base stations and communication cells may belong to the same mobile communication network, Public Land Mobile Network (PLMN), Mobile Network Operator (MNO) and/or Mobile Virtual Network Operator (MVNO), or belong to different mobile communication networks, PLMNs, MNOs and/or MVNOs. In the following, mobile communication networks, PLMNs, MNOs and MVNOs are collectively referred to as PLMNs.

Figure 1 schematically shows an overview of a wireless communication system 1 to which the communication control apparatus according to the present embodiment of the present disclosure is applied. The wireless communication system 1 includes 5G wireless communication system 11, 4G wireless communication system 12, and satellite communication system 13. 5G wireless communication system 11 that complies with the fifth generation mobile communication system (5G) uses NR (New Radio) or 5G NR (Fifth Generation New Radio) as the radio access technology (RAT) and 5GC (Fifth Generation Core) as the core network. 4G wireless communication system 12 that complies with the fourth generation mobile communication system (4G) uses LTE (Long Term Evolution) or LTE-Advanced as the radio access technology and EPC (Evolved Packet Core) as the core network. Satellite communication system 13 is for satellite communication via communication satellite 131. Although not shown in the figure, the wireless communication system 1 may include wireless communication networks of a generation prior to 4G, a generation later than 5G (e.g. 6G), or any wireless communication networks that are not associated with generations, such as Wi-Fi (registered trademark). The wireless communication system 1 may not include some or all of the 5G wireless communication system 11, the 4G wireless communication system 12 and the satellite communication system 13.

The 5G wireless communication system 11 may include a plurality of 5G base stations 111A, 111B, and 111C (hereinafter collectively referred to as 5G base station 111) installed on the ground capable of communicating by 5G NR with communication devices 2A, 2B, 2C, and 2D (hereinafter collectively referred to as communication device(s) 2) such as smartphones, which are also referred to as UE (User Equipment). 5G base station 111 is also referred to as gNodeB (gNB). The coverage or support range of each 5G base station 111A, 111B and 111C is referred to as a cell 112A, 112B and 112C (hereinafter collectively referred to as 5G cell 112).

The size of the 5G cell 112 of each 5G base station 111 is arbitrary, but typically ranges from a few meters to several tens of kilometers in radius. Although there is no established definition, cells with a radius of a few meters to ten meters are called femtocells, cells with a radius of ten meters to several tens of meters are called picocells, cells with a radius of several tens of meters to several hundred meters are called microcells, and cells with a radius of more than several hundreds of meters are called macrocells. In 5G, high frequency radio waves such as millimeter waves are often used, and their high tendency to propagate in a straight-line causes radio waves to be blocked by obstacles, shortening the communication distance. For this reason, 5G tends to use more small cells than 4G and earlier generations.

The communication device 2 can conduct 5G communication when it is located within at least one of a plurality of 5G cells 112A, 112B and 112C. In the example shown in the figure, communication device 2B in 5G cells 112A and 112B can communicate with both 5G base stations 111A and 111B by 5G NR. In addition, the communication device 2C in the 5G cell 112C can communicate with the 5G base station 111C by 5G NR. Communication device 2A and 2D are outside of all 5G cells 112A, 112B and 112C, so they are not able to communicate by 5G NR. The 5G NR-based 5G communication between each communication device 2 and each 5G base station 111 is managed by the 5GC, which is the core network. For example, the 5GC transfers data to and from each 5G base station 111, transfers data to and from external networks such as the EPC, the satellite communication system 13 and the Internet, and manages the movement of the communication device 2.

The 4G wireless communication system 12 comprises a plurality of 4G base stations 121 (only one of them is shown in Figure 1) installed on the ground that can communicate with the communication device 2 by LTE or LTE-Advanced. The base station 121 in 4G is referred to as eNodeB (eNB). Similar to each 5G base station 111, the communication range or support range of each 4G base station 121 is also called a cell and is shown as 122.

The communication device 2 can conduct 4G communication when it is located within 4G cell 122. In the example shown in the figure, the communication devices 2A and 2B in the 4G cell 122 can communicate with the 4G base station 121 by LTE or LTE-Advanced. Communication device 2C and 2D are outside the 4G cell 122 and are not able to communicate by LTE or LTE-Advanced. The 4G communication by LTE and LTE-Advanced between each communication device 2 and each 4G base station 121 is managed by the EPC, which is the core network. For example, the EPC manages the transfer of data to and from each 4G base station 121, the transfer of data to and from external networks such as 5GC, the satellite communication system 13 and the Internet, and the movement management of the communication device 2.

If we take a look at each communication device 2A, 2B, 2C and 2D in the example shown in the figure, the communication device 2A is in a state that enables 4G communication with 4G base station 121, and communication device 2B is in a state that enables 5G communication with 5G base stations 111A and 111B and 4G communication with 4G base station 121, and communication device 2C is in a state that enables 5G communication with 5G base station 111C. When there are multiple base stations (111A, 111B and 121) as in the case of communication device 2B, one base station is selected as the most suitable for the communication device 2B in terms of communication quality etc., under the control of the 5GC and/or the EPC, which is the core network. For the communication device 2D that is not in a state that enables 5G communication with any 5G base station 111 or 4G communication with any 4G base station 121, the communication is conducted using the satellite communication system 13 described below.

The satellite communication system 13 is the wireless communication system using communication satellites 131 as non-terrestrial base stations. The communication satellites 131 are low-earth-orbit satellites flying in low-earth-orbit outer space of 500 to 700 km above the ground. Similar to 5G base station 111 and 4G base station 121, the communication range or support range of each communication satellite 131 is also called a cell and is shown as 132. Thus, a communication satellite 131 as a non-terrestrial base station provides a satellite communication cell 132 as a non-terrestrial communication cell onto the ground. Communication device 2 on the ground can conduct satellite communication when it is inside the satellite communication cell 132. Similar to 5G base station 111 in the 5G wireless communication system 11 and 4G base station 121 in the 4G wireless communication system 12, communication satellite 131 as the base station in the satellite communication system 13 is capable of wireless communication directly or indirectly via aircraft etc. with the communication device 2 within the satellite communication cell 132. The radio access technology used by the communication satellite 131 for wireless communication with the communication device 2 in the satellite communication cell 132 may be 5G NR, the same as the 5G base station 111, or LTE or LTE-Advanced, the same as the 4G base station 121, or any other radio access technology that the communication device 2 can use. Therefore, there is no need for the communication device 2 to have any special functions or components for satellite communication.

The satellite communication system 13 is equipped with a gateway 133 as a ground station that is installed on the ground and can communicate with the communication satellite 131. The gateway 133 is equipped with a satellite antenna to communicate with the communication satellite 131, and is connected to the 5G base station 111 and/or the 4G base station 121 as terrestrial base stations that constitute the terrestrial network (TN), via the 5G NR and/or LTE as the respective radio access technologies or other wired or wireless access technologies and/or interfaces. In this way, the gateway 133 connects the non-terrestrial network (NTN), which is comprising communication satellites 131, and the terrestrial network TN, which is comprising terrestrial base stations 111 and 121, for mutual communication. When the communication satellite 131 conducts 5G communication with the communication device 2 in the satellite communication cell 132 by 5G NR, the 5GC connected via the gateway 133 and the 5G base station 111 in the TN (or the 5G radio access network) is used as the core network. When the communication satellite 131 conducts 4G communication with the communication device 2 in the satellite communication cell 132 by LTE or LTE-Advanced, the EPC connected via the gateway 133 and the 4G base station 121 in the TN (or the 4G radio access network) is used as the core network. In this way, appropriate coordination is made between different wireless communication systems such as 5G wireless communication system 11, 4G wireless communication system 12, satellite communication system 13 etc. through the gateway 133.

Satellite communication by communication satellites 131 is mainly used for covering areas with no or few terrestrial base stations such as 5G base stations 111 and 4G base stations 121 etc. In the example shown in the figure, a communication device 2D that is outside the communication cells of all the terrestrial base stations communicates with the communication satellite 131. On the other hand, communication devices 2A, 2B and 2C that are in good communication with either of the terrestrial base stations, are also in the satellite communication cell 132 and can communicate with the communication satellite 131. However, by communicating with the terrestrial base stations instead of the communication satellite 131 as the satellite base station in principle, the limited communication resources (including power) of the communication satellite 131 are saved for the communication device 2D etc. The communication satellite 131 uses beamforming to direct the communication radio wave to the communication device 2D in the satellite communication cell 132, thereby the communication quality with the communication device 2D is improved.

The size of the satellite communication cell 132 of the communication satellite 131 as a satellite base station depends on the number of beams emitted by the communication satellite 131. For example, a satellite communication cell 132 with a diameter of about 24 km can be formed by combining up to 2,800 beams. As illustrated, a satellite communication cell 132 is typically larger than a terrestrial communication cell such as a 5G cell 112 or a 4G cell 122, and could contain one or more 5G cells 112 and/or 4G cells 122 inside it. The above example shows a communication satellite 131 flying in low-earth-orbit (LEO: Low Earth Orbit) outer space at a height of about 500 km to 700 km above the ground as a flying non-terrestrial base station. However, a communication satellite flying in geostationary orbit (GEO: Geosynchronous Equatorial Orbit) or other higher orbit in outer space, or an unmanned or manned aircraft flying in stratosphere or other lower (e.g. about 20 km above the ground) atmosphere may be used as a non-terrestrial base station in addition to or instead of the communication satellite 131.

As described above, the wireless communication system 1 according to the present embodiment includes the terrestrial network (TN) 11, 12, capable of communicating with communication device 2 in the terrestrial communication cell 112, 122 provided on the ground by terrestrial base station 111, 121 installed on the ground, and the non-terrestrial network (NTN) 13, capable of communicating with communication device 2 in the non-terrestrial communication cell 132 provided on the ground by flying non-terrestrial base station 131. The communication control apparatus according to the present embodiment controls the TN and/or the NTN.

Figure 2 is a schematic functional block diagram of the communication control apparatus 3 according to the present embodiment. The communication control apparatus 3 has a movement information acquisition unit 31, an activity history information collection unit 32, a switching candidate detection unit 33, a cell information acquisition unit 34, a service quality information collection unit 35, a service availability determination unit 36, and a connection control unit 37. These functional blocks are realized by the cooperation of hardware resources, such as the central processing unit, memory, input devices, output devices, and peripheral devices connected to the computer, and software that is executed using them. Regardless of the type of computer or its installation location, each of the above functional blocks may be realized with the hardware resources of a single computer, or by combining hardware resources distributed across multiple computers. For example, some or all of functional blocks of the communication control apparatus 3 may be realized in a distributed or centralized manner by computer and/or processor provided in the communication device 2, the terrestrial base stations 111, 121, the non-terrestrial base station 131, the gateway 133, and the core network (not shown in Figure 2) to which the terrestrial base stations 111, 121 and/or the non-terrestrial base station 131 are connected.

In the example in Figure 2, the communication device 2 is connected to the 1st PLMN (shown as "PLMN1" in Figure 2) as the first network. The 1st PLMN is a mobile communication network operated by a first network operator that is an MNO or an MVNO. For example, the 1st PLMN is constituted by the 5G wireless communication system 11, the 4G wireless communication system 12, the satellite communication system 13 etc. as described above. In the example in Figure 2, the 1st PLMN is constituted by the 5G wireless communication system 11 or the 4G wireless communication system 12. One terrestrial communication cell 112, 122 (dotted line) formed by one terrestrial base station 111, 121 schematically or symbolically represents the 1st PLMN as a TN. Besides, the 1st PLMN in the example in Figure 2 is a home network to which a user of the communication device 2 subscribes for communication service. In other examples, the 1st PLMN may be a roaming network to which the communication device 2 can roam.

As described below, the communication device 2 is moving toward outside the 1st PLMN. In order for the communication service to be continuously provided to the communication device 2, the communication device 2 needs to be connected to another PLMN before moving out of the 1st PLMN. Such networks that are switching candidates of the communication device 2 is hereinafter collectively referred to as the second network or the 2nd PLMN. In the example in Figure 2, three 2nd PLMNs (respectively shown as "PLMN2-1", "PLMN2-2" and "PLMN2-3" in Figure 2) are schematically illustrated. Each 2nd PLMN is a mobile communication network operated by each second network operator that is an MNO or an MVNO. Each second network operator may be the same network operator or different network operators. Besides, each second network operator and the first network operator may be the same network operator or different network operators. In the present embodiment, it is assumed that the first network operator and each second network operator are all different network operators from each other.

Each 2nd PLMN is constituted by the 5G wireless communication system 11, the 4G wireless communication system 12, the satellite communication system 13 etc. as described above. In the example in Figure 2, the 2nd-1st PLMN (PLMN2-1) and the 2nd-2nd PLMN (PLMN2-2) as TNs are constituted by the 5G wireless communication system 11 or the 4G wireless communication system 12, and the 2nd-3rd PLMN (PLMN2-3) as an NTN is constituted by the satellite communication system 13.

The 2nd-1st PLMN, which is appended with "NW Sharing", schematically or symbolically represents a network that shares a part of a network facility with the 1st PLMN. Figure 3 schematically shows the 2nd-1st PLMN. The 2nd-1st PLMN (PLMN2-1) shares all or part of its radio access network (RAN) with the 1st PLMN (PLMN1). However, the core network (CN) including UDM (Unified Data Management) and/or HSS (Home Subscriber Server), which handle subscriber information, is provided individually in the 1st PLMN and the 2nd-1st PLMN. Such a configuration is also called a MOCN (Multi-Operator Core Network). The communication device 2 before the move in Figure 2 is connected to the core network of the 1st PLMN via the shared RAN. In case the communication device 2 after the move in Figure 2 is connected to the 2nd-1st PLMN, it is connected to the core network of the 2nd-1st PLMN via the shared RAN. The 1st PLMN and the 2nd-1st PLMN can communicate with each other through the shared RAN. In other examples, the 1st PLMN and the 2nd-1st PLMN may communicate with each other between their core networks.

The 2nd-2nd PLMN, which is appended with "Roaming", schematically or symbolically represents a roaming network to which the communication device 2 can roam. Figure 4 schematically shows the 2nd-2nd PLMN. The 2nd-2nd PLMN (PLMN2-2) has a radio access network (RAN) and a core network (CN) both different form the 1st PLMN (PLMN1). The communication device 2 before the move in Figure 2 is connected to the core network of the 1st PLMN via the RAN of the 1st PLMN. In case the communication device 2 after the move in Figure 2 is connected to the 2nd-2nd PLMN, it is connected to the core network of the 2nd-2nd PLMN via the RAN of the 2nd-2nd PLMN. The 1st PLMN and the 2nd-2nd PLMN can communicate with each other between their core networks.

The 2nd-3rd PLMN, which is appended with "NTN", schematically or symbolically represents an NTN. In case the 2nd-3rd PLMN is a roaming network, its configuration is similar to Figure 4. Therefore, the 2nd-3rd PLMN (PLMN2-3) has a radio access network (RAN) and a core network (CN) both different form the 1st PLMN (PLMN1). The communication device 2 before the move in Figure 2 is connected to the core network of the 1st PLMN via the RAN of the 1st PLMN. In case the communication device 2 after the move in Figure 2 is connected to the 2nd-3rd PLMN, it is connected to the core network of the 2nd-3rd PLMN via the RAN (communication satellite 131, gateway 133 etc.) of the 2nd-3rd PLMN. The 1st PLMN and the 2nd-3rd PLMN can communicate with each other between their core networks.

It should be noted that the above classifications such as "NW Sharing", "Roaming", "NTN" etc. are not mutually exclusive. For example, the 2nd PLMN may be an NTN *("NTN")* as a roaming network ("Roaming") that shares a part of a network facility with the 1st PLMN ("NW Sharing"). In the present embodiment, all the 2nd PLMNs are assumed to be roaming networks, but the 2nd PLMN may be a home network in other examples.

The movement information acquisition unit 31 acquires movement information concerning the movement of the communication device 2. The movement information includes at least one of the following: the movement route of the communication device 2, the arrival time of the communication device 2 at each location on the movement route, the traffic condition on the movement route, the movement speed of the communication device 2, the movement direction of the communication device 2, and the current position of the communication device 2. Some or all of these movement information can be acquired from the communication device 2 itself. For example, the movement route, the arrival time at each location on the movement route, and the traffic condition on the movement route can be acquired from map applications and/or navigation applications installed in the communication device 2. In addition, the movement speed, the movement direction and the current position can be acquired from a positioning module such as a GPS module installed in the communication device 2.

The movement information acquisition unit 31 may estimate some or all of the movement information of the communication device 2 based on the activity history information collected by the activity history information collection unit 32. The activity history information collection unit 32 collects activity history information of one or more identified or unidentified communication devices 2. The activity history information collected by the activity history information collection unit 32 is also used by the switching candidate detection unit 33 described below.

For example, the NWDAF (Network Data Analytics Function) and/or the LMF (Location Management Function) introduced in the 5GC as the core network CN of 5G can be used as the activity history information collection unit 32. The NWDAF is responsible for collecting and analyzing data on the network including 5G network. Specifically, the NWDAF collects and accumulates activity history information (including history information on the base stations to which the communication devices 2 were connected and the locations of the communication devices 2) on various activities performed on the network by a number of communication devices 2 connected to the network, and utilizes the analysis results for traffic control on the network, for example. The LMF manages the physical location of a number of communication devices 2 on the network including 5G network. In other wireless communication systems, including those of later generations than 5G, functions similar to the NWDAF and/or the LMF might be provided under different names. Such similar functions may be used in the present embodiment in place of or in addition to the NWDAF and/or the LMF.

Servers used by service providers that provide map services, navigation services, location tracking services etc. for a large number of communication devices 2 connected to the network, can also be used as the activity history information collection unit 32. In these servers, the activity history information related to the various activities performed in connection with the services provided to the many communication devices 2 connected to the network (including history information on the location of the communication devices 2) can also be collected.

From the NWDAF, the LMF and/or the servers of service providers as the activity history information collection unit 32, statistical information about the activities on the network of an unspecified number of the communication devices 2 connected to the network (including statistical information about the base stations to which they were connected) and/or historical information about their physical locations can be acquired.

Based on the activity history information (including congestion information and/or traffic information on the network and/or physically) of these unspecified number of communication devices 2 during each time period, the movement information acquisition unit 31 can accurately estimate the position and/or the movement of the communication device 2, which is the target of communication control by the communication control apparatus 3, at the present or future time. Based on such activity history information, the switching candidate detection unit 33 can accurately detect the 2nd PLMN (PLMN2-1, PLMN2-2 and PLMN2-3) to which the communication device 2 is moving.

For example, if the communication traffic amount and/or the number of communication devices 2 were significantly high in the past in specific area among a plurality of areas where the communication device 2 is likely to be located in the present or future time period when the movement information acquisition unit 31 estimates the movement information of the communication device 2, it can be estimated that the communication device 2 is highly likely to be located in such specific area. Similarly, if the communication traffic amount and/or the number of communication devices 2 were significantly high in the past in specific communication cell among a plurality of communication cells that are likely to be connected by the communication device 2 in the present or future time period when the switching candidate detection unit 33 detects the 2nd PLMN, a network to which such specific communication cell belongs can be detected as the 2nd PLMN.

From the NWDAF, the LMF and/or the servers of service providers as the activity history information collection unit 32, statistical information about the activities on the network (including statistical information about the connected base stations) not only of an unspecified number of the communication devices 2 but also of the communication device 2 itself for the estimation and/or the communication control and/or historical information about its physical location can be acquired. Based on the activity history information of the communication device 2 itself during each time period, the movement information acquisition unit 31 can accurately estimate the position and/or the movement of the communication device 2 at the present or future time, and the switching candidate detection unit 33 can detect an appropriate 2nd PLMN by referring to the history of communication cells to which the communication device 2 was connected in the past.

For example, if the communication device 2 was frequently located in a specific area in the present or future time period when the movement information acquisition unit 31 estimates the movement information of the communication device 2, it can be estimated that the communication device 2 is highly likely to be located in such specific area. Similarly, if the communication device 2 was frequently connected to a specific communication cell in the present or future time period when the switching candidate detection unit 33 detects the 2nd PLMN, a network to which such specific communication cell belongs can be preferentially detected as the 2nd PLMN.

In addition to or instead of the activity history information on past days as described above, the movement information acquisition unit 31 and/or the switching candidate detection unit 33 may use the activity history information of the communication device 2 itself immediately before (e.g. within one hour) estimating the movement information of the communication device 2 and/or detecting the 2nd PLMN. For example, if the communication device 2 was moving in a specific area in a specific direction within 30 minutes before the movement information acquisition unit 31 estimates the movement information of the communication device 2, it can be presumed that the communication device 2 is highly likely to be located in the specific area or the proximity area where it can move in 30 minutes toward the specific direction from the specific area. Similarly, if the communication device 2 was connected to a specific communication cell within 30 minutes before the switching candidate detection unit 33 detects the 2nd PLMN, a network to which a communication cell overlapping and/or adjacent with such specific communication cell belongs can be preferentially detected as the 2nd PLMN.

The switching candidate detection unit 33 detects one or more 2nd PLMNs as switching candidates for the communication device 2 connected to the 1st PLMN. In the example in Figure 2, the switching candidate detection unit 33 detects the plurality of 2nd PLMNs (PLMN2-1, PLMN2-2 and PLMN2-3) to which the communication device 2 is moving, based on the movement information acquired by the movement information acquisition unit 31, the activity history information collected by the activity history information collection unit 32, and the various cell information such as the cell placement information acquired by the cell information acquisition unit 34.

The cell information acquisition unit 34 acquires the cell placement information concerning the placement of communication cells of one or more 2nd PLMNs to be detected by the switching candidate detection unit 33. The cell information acquisition unit 34 acquires, for example, the placement on the ground of each of the communication cells of the plurality of 2nd PLMNs (PLMN2-1, PLMN2-2 and PLMN2-3) as shown in Figure 2, from each base station itself that provides each such communication cell and/or the core network CN which centrally manages the information on each such communication cell etc. This cell placement information not only enables recognition of the center position of each communication cell and the shape and the size of the coverage area (communication range), but also enables recognition of the presence or absence of communication cells in each area on the ground, the types of communication cells (terrestrial communication cell or non-terrestrial communication cell), the density of communication cells, the continuity and/or overlap of communication cells, the distance from the center position and/or the edge of a communication cell etc. The switching candidate detection unit 33 refers to this cell placement information together with other information (such as the movement information of the communication device 2 acquired by the movement information acquisition unit 31) to detect the 2nd PLMN as the switching candidate for the communication device 2.

The above are separate explanations of the various types of information that can be referenced when the switching candidate detection unit 33 detects the 2nd PLMN. In practice, the switching candidate detection unit 33 can holistically refer to and/or consider these pieces of information (the movement information acquired by the movement information acquisition unit 31, the activity history information collected by the activity history information collection unit 32, and/or the cell placement information acquired by the cell information acquisition unit 34), and detect one or more 2nd PLMNs which are recognized as optimal under certain decision criteria. For this purpose, the switching candidate detection unit 33 may be configured by artificial intelligence which has machine-learned comprehensive training data and/or learning data.

The service quality information collection unit 35 collects service quality information in one or more 2nd PLMNs (PLMN2-1, PLMN2-2 and PLMN2-3) detected by the switching candidate detection unit 33. The service quality information collection unit 35 is preferably provided in the radio access network (RAN) and/or the core network (such as NWDAF in Figure 6) of the 2nd PLMN itself. Examples of the service quality information to be collected by the service quality information collection unit 35 include information concerning the service quality in the 2nd PLMN, the coverage (area) of the 2nd PLMN, the service provision method in the 2nd PLMN, and the switching method from the 1st PLMN to the 2nd PLMN.

Figure 5 shows four concrete examples of the service quality information collected by the service quality information collection unit 35. In this figure, in response to each query from the 1st PLMN to the 2nd PLMN shown in the left-hand column, each service quality information in the 2nd PLMN shown in the right-hand column is shared from the 2nd PLMN to the 1st PLMN.

The first service quality information relates to the service quality in the 2nd PLMN. First, as a query to the 2nd PLMN, the 1st PLMN notifies the 2nd PLMN of the content and/or type of the service that the communication device 2 connected to the 1st PLMN is receiving. In response to this notification, the 2nd PLMN directly or indirectly shares with the 1st PLMN its expectation of the service quality (QoS: Quality of Service) if the 2nd PLMN itself provides the service to the communication device 2.

In case the 2nd PLMN is a 5G network, the information concerning QoS in the 2nd PLMN includes various QoS parameters specified by the 5QI (5G QoS Identifier) etc. Examples of the QoS parameter include: bit rate guarantee, priority level, packet delay budget, packet error rate, ARP (Allocation and Retention Priority), Guaranteed Flow Bit Rate (GFBR), Maximum Flow Bit Rate (MFBR), Aggregate Maximum Bit Rate (AMBR), and maximum packet loss rate.

The 5QI defines recommended combinations of the various QoS parameters described above for typical use cases. The use cases are roughly classified into three resource types: non-guaranteed bit rate (Non-GBR), guaranteed bit rate (GBR) and delay-critical GBR. Each resource type is subdivided into several different QoS levels, a combination of recommended QoS parameters is defined for each QoS level, and a unique 5QI is set to specify such combination. For the above three resource types, the required QoS level is generally higher in the order of Non-GBR, GBR and delay-critical GBR (from the lowest to the highest).

The second service quality information relates to the coverage of the 2nd PLMN. First, as a query to the 2nd PLMN, the 1st PLMN notifies the 2nd PLMN of the geographical information such as the current position of the communication device 2 connected to the 1st PLMN. In response to this notification, the 2nd PLMN directly or indirectly shares with the 1st PLMN the information such as its own cell, PLMN and tracking area (location registration area) where the service is to be provided to the communication device 2.

The third service quality information relates to the service provision method in the 2nd PLMN. In response to a query from the 1st PLMN about the service provision method, the 2nd PLMN directly or indirectly shares with the 1st PLMN the information such as a network slice used to provide the service to the communication device 2, charging (billing) information in service provision etc.

The fourth service quality information relates to the switching method from the 1st PLMN to the 2nd PLMN. In response to a query from the 1st PLMN about the switching method, the 2nd PLMN directly or indirectly shares with the 1st PLMN the switching type (mode) such as handover and redirection and/or support information such as adjacent (neighbor) cells and/or frequency bands to be used or referred to when conducting the switching.

It is preferable that the above service quality information collected by the service quality information collection unit 35 is in accordance with the actual communication mode of the communication device 2 in the 2nd PLMN. For example, in the 2nd-1st PLMN in Figure 3, it is preferable that the network sharing communication quality information in communication by network sharing with the 1st PLMN is collected by the service quality information collection unit 35, as the service quality information that is distinguished from the service quality information in communication without network sharing (not shown). Similarly, in the 2nd-2nd PLMN in Figure 4, it is preferable that the roaming communication quality information in roaming communication is collected by the service quality information collection unit 35, as the service quality information that is distinguished from the service quality information in communication without roaming (not shown).

The queries and responses as shown in Figure 5 can be made through any interfaces and/or communication paths between the first PLMN and the 2nd PLMN. For example, in the case of network sharing as in Figure 3, the queries and responses as in Figure 5 may be made through the shared network facility such as RAN. Also, including the case of network sharing as in Figure 3 and the case of roaming as in Figure 4, the queries and response as in Figure 5 may be made between the core networks of the first PLMN and the 2nd PLMN.

The queries and responses as in Figure 5 may be made through the NEF in the 5G. Figure 6 shows a schematic example of the procedure when queries and responses as in Figure 5 are made by AF (Application Function) outside the 5GC and NEF (Network Exposure Function) and/or NWDAF inside the 5GC. AF is a generic term for external functions realized by applications etc. outside the 5GC. NEF provides an application programming interface (API) to AF for various functions inside the 5GC including NWDAF.

In the example shown in the figure, the 1st PLMN (PLMN1) as a query source functions as an AF and uses "Analytics Exposure", one of the APIs of the NEF, to request the NEF of the 2nd PLMN for the service quality information in the 2nd PLMN (PLMN2) as a query destination (step "1" in the figure). At this time, the AF (PLMN1) or the NEF may add to the query the identification information indicating that the query is from a PLMN different from the 2nd PLMN. The NEF sends the request for the service quality information from the AF to the NWDAF of the 2nd PLMN using the interface "Analytics Subscription" (step "2" in the figure). At this time, the NEF may generate the request for the service quality information according to the information provided from the AF in step "1" in the figure based on the mapping in step "0" in the figure, and send it to the NWDAF in step "2" in the figure.

The NWDAF, functioning as the service quality information collection unit 35, generates or collects the service quality information in the 2nd PLMN (corresponding to the right-hand column in Figure 5) in response to the request (corresponding to the left-hand column in Figure 5) in steps "1" and/or "2" in the figure. This service quality information in the 2nd PLMN is provided from the NWDAF to the NEF in step "3" in the figure, and further provided from the NEF to the AF (1st PLMN) in step "4" in the figure.

To ensure that the service quality information in the 2nd PLMN as described above is promptly provided in response to a query from the 1st PLMN, it is preferable that the service quality information collection unit 35 collects such service quality information in advance on a regular basis regardless of whether or not there is a query from the 1st PLMN. Besides, the service quality information collection unit 35 may periodically share the service quality information in the 2nd PLMN with the 1st PLMN even when there is no query from the 1st PLMN. This would make it unnecessary in many cases for the 1st PLMN to inquire the service quality information to the 2nd PLMN, allowing a quick transition to subsequent processes in the service availability determination unit 36 and/or the connection control unit 37 described below. In this way, it is preferable that the service quality information collection unit 35 collects the service quality information in the 2nd PLMN in advance before the connection control unit 37 initiates a switching procedure of the communication device 2 from the 1st PLMN to the 2nd PLMN. Also, it is preferable that the service quality information in the 2nd PLMN collected by the service quality information collection unit 35 is shared between the 1st PLMN and the 2nd PLMN in advance before the connection control unit 37 initiates a switching procedure of the communication device 2 from the 1st PLMN to the 2nd PLMN.

The service availability determination unit 36 determines whether or not the 2nd PLMN can continue to provide the service that the 1st PLMN is providing to the communication device 2, based on communication between the 1st PLMN from which the communication device 2 is switched and the 2nd PLMN to which the communication device 2 is switched. Specifically, the service availability determination unit 36 determines whether or not each of the 2nd PLMNs (PLMN2-1, PLMN2-2 and PLMN2-3) can continue to provide the service to the communication device 2, based on the service quality information collected by the service quality information collection unit 35, which is shared between the 1st PLMN and each of the 2nd PLMNs through any interface and/or communication path illustrated with respect to Figures 3 to 6. The service availability determination unit 36 comprehensively considers the various service quality information in the right-hand column in Figure 5 to determine whether or not each of the 2nd PLMNs can continue to provide the service to the communication device 2.

It should be noted that the service availability determination unit 36 may compare the service quality information of all the 2nd PLMNs as switching candidates for the communication device 2, and determine the 2nd PLMN that provides the highest service quality among them. If the communication device 2 remains within the coverage area of the 1st PLMN, the service availability determination unit 36 may compare the service quality information of the 1st PLMN currently providing the service to the communication device 2 and the service quality information of all the 2nd PLMNs as switching candidates for the communication device 2, and determine the PLMN that provides the highest service quality among them. As a result, if the service quality of the 1st PLMN is determined to be higher than that of any of the 2nd PLMNs, the connection control unit 37 described below maintains the connection of the communication device 2 to the 1st PLMN without switching to the 2nd PLMN.

The service availability determination unit 36 may determine whether or not the 2nd PLMN can continue to provide the service to the communication device 2, based on the service quality information collected by the service quality information collection unit 35, which is shared from the 2nd PLMN as a switching candidate in a switching procedure such as handover and redirection of the communication device 2 from the 1st PLMN by the connection control unit 37. Besides, the service availability determination unit 36 may determine whether or not the 2nd PLMN can continue to provide the service to the communication device 2, based on the service quality information collected by the service quality information collection unit 35, which is shared from the 2nd PLMN in response to a query from the 1st PLMN as shown in Figure 5 and/or 6.

For the 2nd-1st PLMN in Figure 3 which shares a part of a network facility with the 1st PLMN, the service availability determination unit 36 determines whether or not the 2nd-1st PLMN can continue to provide the service to the communication device 2, based on the network sharing communication quality information shared between the 1st PLMN and the 2nd-1st PLMN. Similarly, for the 2nd-2nd PLMN in Figure 4 which is a roaming network, the service availability determination unit 36 determines whether or not the 2nd-2nd PLMN can continue to provide the service to the communication device 2, based on the roaming communication quality information shared between the 1st PLMN and the 2nd-2nd PLMN.

The connection control unit 37 switches the connection of the communication device 2 from the 1st PLMN to the 2nd PLMN, if it is determined by the service availability determination unit 36 that the 2nd PLMN can continue to provide the service to the communication device 2. In case there are multiple 2nd PLMNs as switching candidates for the communication device 2 (PLMN2-1, PLMN2-2, PLMN2-3 etc. in Figure 2), the connection control unit 37 switches the connection of the communication device 2 to one of the 2nd PLMNs determined to be capable of continuously providing the service to the communication device 2. For example, the connection control unit 37 switches the connection of the communication device 2 to the 2nd PLMN determined by the service availability determination unit 36 to provide the highest service quality among the plurality of 2nd PLMNs. When switching the connection of the communication device 2 to the 2nd-2nd PLMN in Figure 4 which is a roaming network, the connection control unit 37 causes the communication device 2 to roam to the 2nd-2nd PLMN.

According to the present embodiment, if it is determined by the service availability determination unit 36 that the 2nd PLMN can continue to provide the service that the 1st PLMN is providing to the communication device 2, the connection of the communication device 2 is switched from the 1st PLMN to the 2nd PLMN by the connection control unit 37. Therefore, the service continuity in different PLMNs can be improved.

The present disclosure has been described above based on embodiments. It is obvious to those skilled in the art that various variations are possible in the combination of each component and/or each process in the exemplary embodiments, and that such variations are also encompassed within the scope of the present disclosure.

While Figure 2 describes the PLMN switching of a moving communication device 2, the present disclosure is also applicable to the PLMN switching of a communication device 2 not moving and/or a communication device 2 remaining within the coverage area of the 1st PLMN. When the service quality in the 1st PLMN to which the communication device 2 is currently connected deteriorates due to congestion or other reasons, the connection control unit 37 can switch the communication device 2 to the 2nd PLMN whose coverage area overlaps that of the 1st PLMN. Since the 2nd PLMN to which the communication device 2 is to be switched is determined by the service availability determination unit 36 to be capable of continuously providing the service to the communication device 2, the service continuity in different PLMNs can be improved.

It should be noted that the structures, the operations, and the functions of each apparatus and/or each method described in the embodiments can be realized by hardware resources or software resources, or by the cooperation of hardware resources and software resources. As hardware resources, for example, processors, ROMs, RAMs and various integrated circuits can be used. As software resources, for example, programs such as operating systems and applications can be used.

The present disclosure may be expressed as the following items.

1. A communication control apparatus comprising at least one processor that performs:
   by a switching candidate detection unit, detecting a second network as a switching candidate for a communication device connected to a first network;
   by a service availability determination unit, determining whether or not the second network can continue to provide the service that the first network is providing to the communication device, based on communication between the first network and the second network; and
   by a connection control unit, switching the connection of the communication device from the first network to the second network, if it is determined that the second network can continue to provide the service to the communication device.
2. The communication control apparatus according to item 1,
   wherein
   the at least one processor further performs, by a service quality information collection unit, collecting service quality information in the second network, and
   the service availability determination unit determines whether or not the second network can continue to provide the service to the communication device, based on the service quality information shared between the first network and the second network.
3. The communication control apparatus according to item 2, wherein
   the service quality information collection unit is provided in the second network, and
   the service availability determination unit determines whether or not the second network can continue to provide the service to the communication device, based on the service quality information shared from the second network in a switching procedure of the communication device from the first network by the connection control unit.
4. The communication control apparatus according to item 2 or 3, wherein
   the service quality information collection unit is provided in the second network, and
   the service availability determination unit determines whether or not the second network can continue to provide the service to the communication device, based on the service quality information shared from the second network in response to a query from the first network.
5. The communication control apparatus according to item 4, wherein the query is made via the NEF (Network Exposure Function).
6. The communication control apparatus according to any of items 2 to 5, wherein the service quality information in the second network includes at least one of the following:
   service quality, area, service provision method, and
   information concerning how to switch from the first network to the second network.
7. The communication control apparatus according to any of items 2 to 6, wherein the service quality information collection unit collects the service quality information in accordance with a communication mode in the second network.
8. The communication control apparatus according to item 7, wherein
   the service quality information collection unit collects roaming communication quality information in roaming communication as the service quality information in accordance with the communication mode in the second network, the switching candidate detection unit detects the second network that is a roaming network as the switching candidate for the communication device connected to the first network that is a home network,
   the service availability determination unit determines whether or not the second network can continue to provide the service to the communication device, based on the roaming communication quality information shared between the first network and the second network, and
   the connection control unit causes the communication device to roam to the second network, if it is determined that the second network can continue to provide the service to the communication device.
9. The communication control apparatus according to item 7 or 8, wherein
   the service quality information collection unit collects network sharing communication quality information in communication by sharing a part of a network facility of the first network and the second network, as the service quality information in accordance with the communication mode in the second network, and
   the service availability determination unit determines whether or not the second network can continue to provide the service to the communication device, based on the network sharing communication quality information shared between the first network and the second network.
10. The communication control apparatus according to any of items 2 to 9, wherein the service quality information collection unit collects the service quality information in the second network in advance before the connection control unit initiates a switching procedure of the communication device from the first network.
11. The communication control apparatus according to item 10, wherein the service quality information is shared between the first network and the second network in advance before the connection control unit initiates the switching procedure of the communication device from the first network.
12. The communication control apparatus according to any of items 1 to 11, wherein
   the at least one processor further performs, by a movement information acquisition unit, acquiring movement information concerning the movement of the communication device, and
   the switching candidate detection unit detects the second network to which the communication device is moving.
13. The communication control apparatus according to any of items 1 to 12, wherein a first network operator operating the first network and a second network operator operating the second network are different from each other.
14. The communication control apparatus according to any of items 1 to 13, wherein
   one of the first network and the second network is a home network to which a user of the communication device subscribes for communication service, and
   the other of the first network and the second network is a roaming network to which the communication device can roam.
15. The communication control apparatus according to any of items 1 to 13, wherein the first network and the second network are roaming networks to which the communication device can roam.
16. The communication control apparatus according to any of items 1 to 15, wherein the first network and the second network share a part of a network facility.
17. The communication control apparatus according to any of items 1 to 16, wherein
   the switching candidate detection unit detects a plurality of the second networks,
   the service availability determination unit determines whether or not the plurality of the second networks can continue to provide the service to the communication device, and
   the connection control unit switches the connection of the communication device to one of the second networks determined to be capable of continuously providing the service to the communication device.
18. A communication control method comprising:
   detecting a second network as a switching candidate for a communication device connected to a first network;
   determining whether or not the second network can continue to provide the service that the first network is providing to the communication device, based on communication between the first network and the second network; and
   switching the connection of the communication device from the first network to the second network, if it is determined that the second network can continue to provide the service to the communication device.
19. A computer-readable medium storing a communication control program causing a computer to perform:
   detecting a second network as a switching candidate for a communication device connected to a first network;
   determining whether or not the second network can continue to provide the service that the first network is providing to the communication device, based on communication between the first network and the second network; and
   switching the connection of the communication device from the first network to the second network, if it is determined that the second network can continue to provide the service to the communication device.

The present disclosure relates to improvement of service continuity in different networks.

1 wireless communication system, 2 communication device, 3 communication control apparatus, 11 5G wireless communication system, 12 4G wireless communication system, 13 satellite communication system, 31 movement information acquisition unit, 32 activity history information collection unit, 33 switching candidate detection unit, 34 cell information acquisition unit, 35 service quality information collection unit, 36 service availability determination unit, 37 connection control unit, 111 5G base station, 112 5G cell, 121 4G base station, 122 4G cell, 131 communication satellite, 132 satellite communication cell, 133 gateway.

## Claims

1. A communication control apparatus comprising at least one processor that performs:
by a switching candidate detection unit, detecting a second network as a switching candidate for a communication device connected to a first network;
by a service availability determination unit, determining whether or not the second network can continue to provide the service that the first network is providing to the communication device, based on communication between the first network and the second network; and
by a connection control unit, switching the connection of the communication device from the first network to the second network, if it is determined that the second network can continue to provide the service to the communication device.

2. The communication control apparatus according to claim 1, wherein
the at least one processor further performs, by a service quality information collection unit, collecting service quality information in the second network, and
the service availability determination unit determines whether or not the second network can continue to provide the service to the communication device, based on the service quality information shared between the first network and the second network.

3. The communication control apparatus according to claim 2, wherein
the service quality information collection unit is provided in the second network, and
the service availability determination unit determines whether or not the second network can continue to provide the service to the communication device, based on the service quality information shared from the second network in a switching procedure of the communication device from the first network by the connection control unit.

4. The communication control apparatus according to claim 2, wherein
the service quality information collection unit is provided in the second network, and
the service availability determination unit determines whether or not the second network can continue to provide the service to the communication device, based on the service quality information shared from the second network in response to a query from the first network.

5. The communication control apparatus according to claim 4, wherein the query is made via the NEF (Network Exposure Function).

6. The communication control apparatus according to claim 2, wherein the service quality information in the second network includes information concerning at least one of the following: service quality, coverage, service provision method, and switching method from the first network to the second network.

7. The communication control apparatus according to claim 2, wherein the service quality information collection unit collects the service quality information in accordance with a communication mode in the second network.

8. The communication control apparatus according to claim 7, wherein
the service quality information collection unit collects roaming communication quality information in roaming communication as the service quality information in accordance with the communication mode in the second network,
the switching candidate detection unit detects the second network that is a roaming network as the switching candidate for the communication device connected to the first network that is a home network,
the service availability determination unit determines whether or not the second network can continue to provide the service to the communication device, based on the roaming communication quality information shared between the first network and the second network, and
the connection control unit causes the communication device to roam to the second network, if it is determined that the second network can continue to provide the service to the communication device.

9. The communication control apparatus according to claim 7, wherein
the service quality information collection unit collects network sharing communication quality information in communication by sharing a part of a network facility of the first network and the second network, as the service quality information in accordance with the communication mode in the second network, and
the service availability determination unit determines whether or not the second network can continue to provide the service to the communication device, based on the network sharing communication quality information shared between the first network and the second network.

10. The communication control apparatus according to claim 2, wherein the service quality information collection unit collects the service quality information in the second network in advance before the connection control unit initiates a switching procedure of the communication device from the first network.

11. The communication control apparatus according to claim 10, wherein the service quality information is shared between the first network and the second network in advance before the connection control unit initiates the switching procedure of the communication device from the first network.

12. The communication control apparatus according to claim 1, wherein
the at least one processor further performs, by a movement information acquisition unit, acquiring movement information concerning the movement of the communication device, and
the switching candidate detection unit detects the second network to which the communication device is moving.

13. The communication control apparatus according to claim 1, wherein a first network operator operating the first network and a second network operator operating the second network are different from each other.

14. The communication control apparatus according to claim 1, wherein
one of the first network and the second network is a home network to which a user of the communication device subscribes for communication service, and
the other of the first network and the second network is a roaming network to which the communication device can roam.

15. The communication control apparatus according to claim 1, wherein the first network and the second network are roaming networks to which the communication device can roam.

16. The communication control apparatus according to claim 1, wherein the first network and the second network share a part of a network facility.

17. The communication control apparatus according to claim 1, wherein
the switching candidate detection unit detects a plurality of the second networks,
the service availability determination unit determines whether or not the plurality of the second networks can continue to provide the service to the communication device, and
the connection control unit switches the connection of the communication device to one of the second networks determined to be capable of continuously providing the service to the communication device.

18. A communication control method comprising:
detecting a second network as a switching candidate for a communication device connected to a first network;
determining whether or not the second network can continue to provide the service that the first network is providing to the communication device, based on communication between the first network and the second network; and
switching the connection of the communication device from the first network to the second network, if it is determined that the second network can continue to provide the service to the communication device.

19. A computer-readable medium storing a communication control program causing a computer to perform:
detecting a second network as a switching candidate for a communication device connected to a first network;
determining whether or not the second network can continue to provide the service that the first network is providing to the communication device, based on communication between the first network and the second network; and
switching the connection of the communication device from the first network to the second network, if it is determined that the second network can continue to provide the service to the communication device.
